# EUROPEAN PATENT APPLICATION

(11) **EP 4 651 241 A1**
(43) Date of publication of application: **19.11.2025**
(21) Application number: 25174369.6
(22) Date of filing: 06.05.2025
(51) Int. Cl.: H01M 4/66, H01M 10/0525, H01M 10/42

(54) **COMPOSITE SUBSTRATE FOR RECHARGEABLE LITHIUM BATTERY AND RECHARGEABLE LITHIUM BATTERY INCLUDING THE SAME**

(30) Priority: 08.05.2024 KR 20240060224
(71) Applicant: SAMSUNG SDI CO., LTD., Yongin-si, Gyeonggi-do 17084 (KR)
(72) Inventor: CHA, Jungwook, Yongin-si, Gyeonggi-do 17084 (KR); HWANG, Heeyeon, Yongin-si, Gyeonggi-do 17084 (KR); KyuSeo, LEE, Yongin-si, Gyeonggi-do 17084 (KR); KWON, Minseok, Yongin-si, Gyeonggi-do 17084 (KR); KIM, Suhyun, Yongin-si, Gyeonggi-do 17084 (KR); KANG, Dayoung, Yongin-si, Gyeonggi-do 17084 (KR)
(74) Representative: Michalski Hüttermann & Partner Patentanwälte mbB

(57) **Abstract**

Disclosed are composite substrates and rechargeable lithium batteries including a composite substrate. The composite substrate includes a support layer that includes an additive, a first metal layer on a top surface of the support layer, and a second metal layer on a bottom surface of the support layer. The additive includes at least one of a ceramic particle and a fire-extinguishing liquid capsule. An amount of the additive is ≥ 1 wt% to ≤ 20 wt% relative to a total weight of the support layer.

## Description

### CROSS-REFERENCE TO RELATED APPLICATION

This U.S. nonprovisional application claims priority under 35 U.S.C § 119 to Korean Patent Application No. 10-2024-0060224 filed on May 8, 2024 in the Korean Intellectual Property Office, the disclosure of which is hereby incorporated by reference in its entirety.

### BACKGROUND

The present disclosure relates to a composite substrate for a rechargeable lithium battery, and to a rechargeable lithium battery including the composite substrate.

With increased use of battery-using electronic devices, such as, e.g., mobile phones, laptop computers, electric vehicles, and the like, there is increasing demand for rechargeable batteries with high energy density and high capacity.

A rechargeable lithium battery typically includes a positive electrode, a negative electrode, and an electrolyte, the positive and negative electrodes include an active material in which intercalation and deintercalation are possible, and generates electrical energy caused by oxidation and reduction reactions when lithium ions are intercalated and deintercalated.

### SUMMARY

An example embodiment of the present disclosure provides a composite substrate capable of hindering, suppressing or blocking an internal short-circuit.

An example embodiment of the present disclosure provides a rechargeable lithium battery capable of hindering, suppressing or blocking ignition.

According to an example embodiment of the present disclosure, a composite substrate for a rechargeable lithium battery may include a support layer that includes an additive, a first metal layer on a top surface of the support layer, and a second metal layer on a bottom surface of the support layer. The additive may include at least one of a ceramic particle and a fire-extinguishing liquid capsule. An amount of the additive may be ≥ 1 wt% to ≤ 20 wt% relative to a total weight of the support layer.

According to an example embodiment of the present disclosure, a rechargeable lithium battery may include a composite substrate of the present disclosure.

### BRIEF DESCRIPTION OF DRAWINGS

FIG. 1 illustrates a simplified conceptual diagram showing a rechargeable lithium battery according to an example embodiment of the present disclosure.
FIGS. 2 to 5 illustrate simplified diagrams showing a rechargeable lithium battery according to an example embodiment of the present disclosure.
FIG. 6 illustrates a cross-sectional view showing a rechargeable lithium battery according to an example embodiment of the present disclosure.
FIGS. 7 and 8 illustrate cross-sectional views showing a composite substrate according to an example embodiment of the present disclosure.

### DETAILED DESCRIPTION OF EMBODIMENTS

In order to sufficiently understand the configuration and effect of the present disclosure, some example embodiments of the present disclosure will be described with reference to the accompanying drawings. It should be noted, however, that the present disclosure is not limited to the following example embodiments, and may be implemented in various forms. Rather, the example embodiments are provided only to disclose the present disclosure and let those skilled in the art fully know the scope of the present disclosure.

In this description, it will be understood that, when an element is referred to as being "on" another element, the element can be directly on the other element or intervening elements may be present between therebetween. In the drawings, thicknesses of some components are exaggerated for effectively explaining the technical contents. Like reference numerals refer to like elements throughout the specification.

Unless otherwise specially noted in this description, the expression of singular form may include the expression of plural form. In addition, unless otherwise specially noted, the phrase "A or B" may indicate "A but not B," "B but not A," and "A and B." The terms "comprises/includes" and/or "comprising/including" used in this description do not exclude the presence or addition of one or more other components.

As used herein, the term "combination thereof" may refer to a mixture, a stack, a composite, a copolymer, an alloy, a blend, or a reaction product.

Unless otherwise especially defined in this description, a particle diameter may be an average particle diameter. In addition, a particle diameter indicates an average particle diameter (D₅₀) where a cumulative volume is about 50 volume % in a particle size distribution. The average particle diameter (D₅₀) may be measured by a method widely known to those skilled in the art, for example, by a particle size analyzer, a transmission electron microscope (TEM) image, or a scanning electron microscope (SEM) image. Alternatively, a dynamic light-scattering measurement device is used to perform a data analysis, the number of particles is counted for each particle size range, and then from this, an average particle diameter (D₅₀) value may be obtained through a calculation. Dissimilarly, a laser scattering method may be utilized to measure the average particle diameter (D₅₀). In the laser scattering method, a target particle is distributed in a dispersion solvent, introduced into a laser scattering particle measurement device (e.g., MT3000 commercially available from Microtrac, Inc), irradiated with ultrasonic waves of 28 kHz at a power of 60 W, and then an average particle diameter (D₅₀) is calculated in the 50% standard of particle diameter distribution in the measurement device.

When the terms "about" or "substantially" are used in this specification in connection with a numerical value, it is intended that the associated numerical value include a tolerance of ±10% around the stated numerical value. When ranges are specified, the range includes all values therebetween such as increments of 0.1 %.

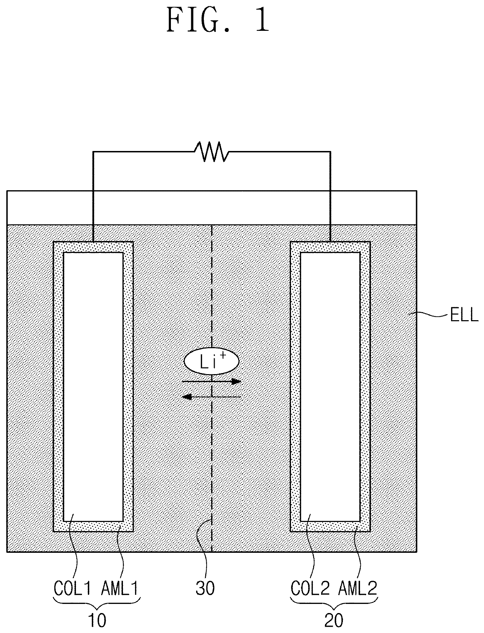

FIG. 1 illustrates a simplified conceptual diagram showing a rechargeable lithium battery according to an example embodiment of the present disclosure. Referring to FIG. 1, a rechargeable lithium battery may include a positive electrode 10, a negative electrode 20, a separator 30, and an electrolyte ELL.

The positive electrode 10 and the negative electrode 20 may be spaced apart from each other across the separator 30. The separator 30 may be located between the positive electrode 10 and the negative electrode 20. The positive electrode 10, the negative electrode 20, and the separator 30 may be in contact with the electrolyte ELL. The positive electrode 10, the negative electrode 20, and the separator 30 may be impregnated in the electrolyte ELL.

The electrolyte ELL may be or include a medium by which lithium ions are transferred between the positive electrode 10 and the negative electrode 20. In the electrolyte ELL, the lithium ions may move through the separator 30 toward one of the positive electrode 10 and the negative electrode 20.

### Positive Electrode 10

The positive electrode 10 for a rechargeable lithium battery may include a current collector COL1 and a positive electrode active material layer AML1 formed on the current collector COL1. The positive electrode active material layer AML1 may include a positive electrode active material, and may further include a binder and/or a conductive material.

For example, the positive electrode 10 may further include an additive that can constitute a sacrificial positive electrode.

An amount of the positive electrode active material may be ≥ 90 wt% to ≤ 99.5 wt% relative to 100 wt% of the positive electrode active material layer AML1. An amount of each, or at least one, of the binder and the conductive material may be ≥ 0.5 wt% to ≤ 5 wt% relative to 100 wt% of the positive electrode active material layer AML1.

The binder may improve attachment of positive electrode active material particles to each other, and may also improve attachment of the positive electrode active material to the current collector COL1. The binder may include, for example, at least one of polyvinyl alcohol, carboxymethyl cellulose, hydroxypropyl cellulose, diacetyl cellulose, polyvinylchloride, carboxylated polyvinylchloride, polyvinylfluoride, ethylene oxide-containing polymer, polyvinylpyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth)acrylic resin, polyester resin, or nylon, but the present disclosure is not limited thereto.

The conductive material may be configured to provide an electrode with conductivity, and any suitable conductive material that does not cause chemical change of a battery may constitute the conductive material to constitute the battery. The conductive material may include, for example, a carbon-based material such as at least one of natural graphite, artificial graphite, carbon black, acetylene black, Ketjen black, carbon fiber, carbon nano-fiber, and carbon nano-tube; a metal powder or metal fiber containing one or more of copper, nickel, aluminum, and silver; a conductive polymer such as a polyphenylene derivative; or a mixture thereof.

Aluminum (Al) may constitute the current collector COL1, but the present disclosure is not limited thereto.

### Positive Electrode Active Material

The positive electrode active material in the positive electrode active material layer AML1 may include a compound (e.g., lithiated intercalation compound) that can reversibly intercalate and deintercalate lithium. For example, the positive electrode active material may include at least one kind of composite oxide including lithium and metal that is or includes at least one of cobalt, manganese, nickel, and a combination thereof.

The composite oxide may include lithium transition metal composite oxide, for example, at least one of lithium-nickel-based oxide, lithium-cobalt-based oxide, lithium-manganese-based oxide, lithium-iron-phosphate-based compounds, cobalt-free nickel-manganese-based oxide, or a combination thereof.

For example, the positive electrode active material may include a compound expressed by one of chemical formulae below. LiₐA_{1-b}X_{b}O_{2-c}D_{c} (where 0.90≤a≤1.8, 0≤b≤0.5, and 0≤c≤0.05); LiₐMn_{2-b}X_{b}O_{4-c}D_{c} (where 0.90≤a≤1.8, 0≤b≤0.5, and 0≤c≤0.05); LiₐNi_{1-b-c}Co_{b}X_{c}O_{2-α}D_{α} (where 0.90≤a≤1.8, 0≤b≤0.5, 0≤c≤0.5, and 0<α<2); LiₐNi_{1-b-c}Mn_{b}X_{c}O_{2-α}D_{α} (where 0.90≤a≤1.8, 0≤b≤0.5, 0≤c≤0.5, and 0<α<2); LiₐNi_{b}Co_{c}L¹_{d}GₑO₂ (where 0.90≤a≤1.8, 0≤b≤0.9, 0≤c≤0.5, 0≤d≤0.5, and 0≤e≤0.1); LiₐNiG_{b}O₂ (where 0.90≤a≤1.8 and 0.001≤b≤0.1); LiₐCoG_{d}O₂ (where 0.90≤a≤1.8 and 0.001≤b≤0.1); LiₐMn_{1-b}G_{b}O₂ (where 0.90≤a≤1.8 and 0.001≤b≤0.1); LiₐMn₂G_{b}O₄ (where 0.90≤a≤1.8 and 0.001≤b≤0.1); LiₐMn_{1-g}G_{g}PO₄ (where 0.90≤a≤1.8 and 0≤g≤0.5); Li_{(3-f)}Fe₂(PO₄)₃ (where 0≤f≤2); LiₐFePO₄ (where 0.90≤a≤1.8).

In the chemical formulae above, A is or includes at least one of Ni, Co, Mn, or a combination thereof, X is or includes at least one of Al, Ni, Co, Mn, Cr, Fe, Mg, Sr, V, a rare-earth element, or a combination thereof, D is or includes at least one of O, F, S, P, or a combination thereof, G is or includes at least one of Al, Cr, Mn, Fe, Mg, La, Ce, Sr, V, or a combination thereof, and L¹ is or includes at least one of Mn, Al, or a combination thereof.

For example, the positive electrode active material may be or include a high-nickel-based positive electrode active material having a nickel amount of equal to or greater than 80 mol%, equal to or greater than 85 mol%, equal to or greater than 90 mol%, equal to or greater than 91 mol%, or equal to or greater than 94 mol% and equal to or less than 99 mol% relative to 100 mol% of metal devoid of lithium in the lithium transition metal composite oxide. The high-nickel-based positive electrode active material may achieve high capacity and thus may be applied to a high-capacity and high-density rechargeable lithium battery.

### Negative Electrode 20

The negative electrode 20 for a rechargeable lithium battery may include a current collector COL2 and a negative electrode active material layer AML2 located on the current collector COL2. The negative electrode active material layer AML2 may include a negative electrode active material and may further include a binder and/or a conductive material.

For example, the negative electrode active material layer AML2 may include a negative electrode active material of ≥ 90 wt% to ≤ 99 wt%, a binder of ≥ 0.5 wt% to ≤ 5 wt%, and a conductive material of ≥ 0 wt% to ≤ 5 wt%.

The binder may improve attachment of negative electrode active material particles to each other, and may also improve attachment of the negative electrode active material to the current collector COL2. The binder may include a non-aqueous binder, an aqueous binder, a dry binder, or a combination thereof.

The non-aqueous binder may include at least one of polyvinyl chloride, carboxylated polyvinyl chloride, polyvinyl fluoride, ethylene propylene copolymer, polystyrene, polyurethane, polytetrafluoroethylene, polyvinylidene fluoride, polyethylene, polypropylene, polyamide imide, polyimide, or a combination thereof.

The aqueous binder may include at least one of styrene-butadiene rubber, (meth)acrylated styrene-butadiene rubber, (meth)acrylonitrile-butadiene rubber, (meth)acrylic rubber, butyl rubber, fluoro elastomer, polyethylene oxide, polyvinyl pyrrolidone, polyepichlorohydrin, polyphosphazene, poly(meth)acrylonitrile, ethylene propylene diene copolymer, polyvinyl pyridine, chlorosulfonated polyethylene, latex, polyester resin, (meth)acrylic resin, phenolic resin, epoxy resin, polyvinyl alcohol, or a combination thereof.

When an aqueous binder constitutes the negative electrode binder, a cellulose-based compound capable of providing viscosity may further be included. The cellulose-based compound may include one or more of carboxymethyl cellulose, hydroxypropylmethyl cellulose, methyl cellulose, and alkali metal salts thereof. The alkali metal may include Na, K, or Li.

The dry binder may include a fibrillizable polymer material, for example, at least one of polytetrafluoroethylene, polyvinylidene fluoride, polyvinylidene fluoride-hexafluoropropylene copolymer, polyethylene oxide, or a combination thereof.

The conductive material may be configured to provide an electrode with conductivity, and any suitable conductive material that does not cause chemical change of a battery may constitute the conductive material in the battery. For example, the conductive material may include a carbon-based material such as at least one of natural graphite, artificial graphite, carbon black, acetylene black, Ketjen black, carbon fiber, carbon nano-fiber, and carbon nano-tube; a metal powder or metal fiber including one or more of copper, nickel, aluminum, and silver; a conductive polymer such as a polyphenylene derivative; or a mixture thereof.

The current collector COL2 may include at least one of a copper foil, a nickel foil, a stainless-steel foil, a titanium foil, a nickel foam, a copper foam, a polymer substrate coated with a conductive metal, or a combination thereof.

### Negative Electrode Active Material

The negative electrode active material in the negative electrode active material layer AML2 may include a material that can reversibly intercalate and deintercalate lithium ions, lithium metal, a lithium metal alloy, a material that can dope and de-dope lithium, or transition metal oxide.

The material that can reversibly intercalate and deintercalate lithium ions may include a carbon-based negative electrode active material, for example, crystalline carbon, amorphous carbon, or a combination thereof. For example, the crystalline carbon may include graphite such as at least one of non-shaped, sheet-shaped, flake-shaped, sphere-shaped, or fiber-shaped natural or artificial graphite, and the amorphous carbon may include at least one of soft carbon, hard carbon, mesophase pitch carbon, or calcined coke.

The lithium metal alloy may include an alloy of lithium and metal that is or includes at least one of Na, K, Rb, Cs, Fr, Be, Mg, Ca, Sr, Si, Sb, Pb, In, Zn, Ba, Ra, Ge, Al, and Sn.

The material that can dope and de-dope lithium may include a Si-based negative electrode active material or a Sn-based negative electrode active material. The Si-based negative electrode active material may include at least one of silicon, silicon-carbon composite, SiOx (where 0<x<2), Si-Q alloy (where Q is alkali metal, alkaline earth metal, Group 13 element, Group 14 element (except for Si), Group 15 element, Group 16 element, transition metal, a rare-earth element, or a combination thereof), or a combination thereof. The Sn-based negative electrode active material may include Sn, SnO₂, a Sn-based alloy, a combination thereof.

The silicon-carbon composite may be or include a composite of silicon and amorphous carbon. According to an example embodiment, the silicon-carbon composite may have a structure in which the amorphous carbon is coated on a surface of the silicon particle. For example, the silicon-carbon composite may include a secondary particle (core) in which primary silicon particles are assembled, and an amorphous carbon coating layer (shell) positioned on a surface of the secondary particle. The amorphous carbon may also be positioned between the primary silicon particles, and for example, the primary silicon particles may be coated with the amorphous carbon. The secondary particles may be dispersed in an amorphous carbon matrix.

The silicon-carbon composite may further include crystalline carbon. For example, the silicon-carbon composite may include a core including crystalline carbon and silicon particles, and may also include an amorphous carbon coating layer positioned on a surface of the core.

The Si-based negative electrode active material or the Sn-based negative electrode active material may be used in combination with a carbon-based negative electrode active material.

### Separator 30

Based on type of the rechargeable lithium battery, the separator 30 may be located between positive electrode 10 and the negative electrode 20. The separator 30 may include one or more of polyethylene, polypropylene, and polyvinylidene fluoride, and may have a multi-layered separator thereof such as a polyethylene/polypropylene bi-layered separator, a polyethylene/polypropylene/polyethylene tri-layered separator, and a polypropylene/polyethylene/polypropylene tri-layered separator.

The separator 30 may include a porous substrate and a coating layer on one or opposite surfaces of the porous substrate, the coating layer including an organic material, an inorganic material, or a combination thereof.

The porous substrate may be or include a polymer layer including a polyolefin including at least one of polyethylene and polypropylene, polyester such as polyethylene terephthalate and polybutylene terephthalate, polyacetal, polyamide, polyimide, polycarbonate, polyetherketone, polyaryletherketone, polyetherimide, polyamideimide, polybenzimidazole, polyethersulfone, polyphenyleneoxide, cyclic olefin copolymer, polyphenylenesulphide, polyethylene naphthalate, glass fiber, Teflon, and polytetrafluoroethylene, or may be or include a copolymer or mixture including two or more of the materials mentioned above.

The organic material may include a polyvinylidenefluoride-based copolymer or a (meth)acrylic copolymer.

The inorganic material may include an inorganic particle including at least one of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, Boehmite, or a combination thereof, but the present disclosure is not limited thereto.

The organic material and the inorganic material may be mixed in one coating layer, or may be present as a stack of a coating layers including the organic material and a coating layer including an inorganic material.

### Electrolyte ELL

The electrolyte ELL for the rechargeable lithium battery may include a non-aqueous organic solvent and a lithium salt.

The non-aqueous organic solvent may constitute a medium for transmitting ions that participate in an electrochemical reaction of the battery.

The non-aqueous organic solvent may include at least one of a carbonate-based solvent, an ester-based solvent, an ether-based solvent, a ketone-based solvent, an alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), or butylene carbonate (BC).

The ester-based solvent may include at least one of methyl acetate, ethyl acetate, n-propyl acetate, dimethyl acetate, methyl propionate, ethyl propionate, decanolide, mevalonolactone, valerolactone, or caprolactone.

The ether-based solvent may include at least one of dibutyl ether, tetraglyme, diglyme, dimethoxyethane, 2-methyltetrahydrofuran, 2.5-dimethyltetrahydrofuran, or tetrahydrofuran. The ketone-based solvent may include cyclohexanone. The alcohol-based solvent may include ethyl alcohol or isopropyl alcohol. The aprotic solvent may include nitriles such as R-CN (where R is a hydrocarbon group having a C2 to C20 linear, branched, or cyclic structure and may include a double bond, an aromatic ring, or an ether group); amides such as dimethylformamide; dioxolanes such as 1,3-dioxolane or 1.4-dioxolane; or sulfolanes.

The non-aqueous organic solvent may be used alone or in a mixture of two or more substances.

In addition, when a carbonate-based solvent is used, a cyclic carbonate and a chain carbonate may be mixed and used, and the cyclic carbonate and the chain carbonate may be mixed in a volume ratio of about 1:1 to about 1:9.

The lithium salt may be or include a material that is dissolved in the non-aqueous organic solvent to constitute a supply source of lithium ions in a battery, and plays a role in enabling a basic operation of a rechargeable lithium battery and in promoting the movement of lithium ions between positive and negative electrodes. The lithium salt may include, for example, at least one of LiPF₆, LiBF₄, LiSbF₆, LiAsF₆, LiClO₄, LiAlO₂, LiAlCl₄, LiPO₂F₂, LiCl, LiI, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (where x and y are integers between 1 to 20), lithium trifluoromethane sulfonate, lithium tetrafluoroethanesulfonate, lithium difluorobis(oxalato)phosphate (LiDFBOP), and lithium bis(oxalato)borate (LiBOB)

### Rechargeable Lithium Battery

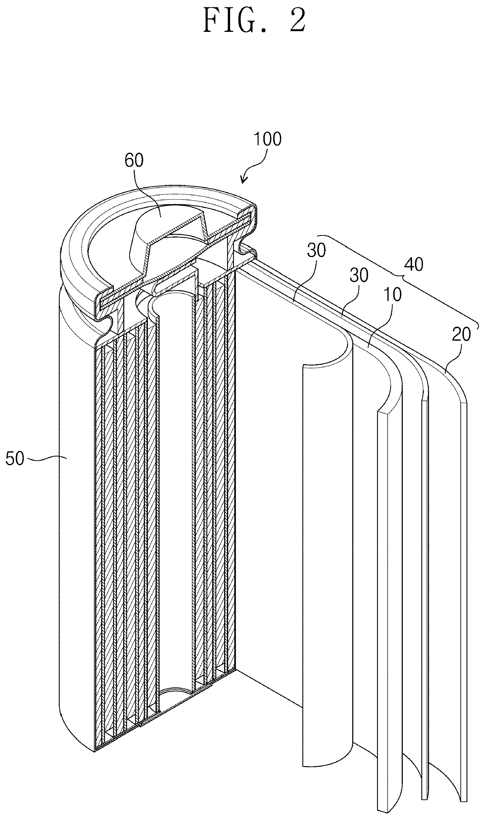

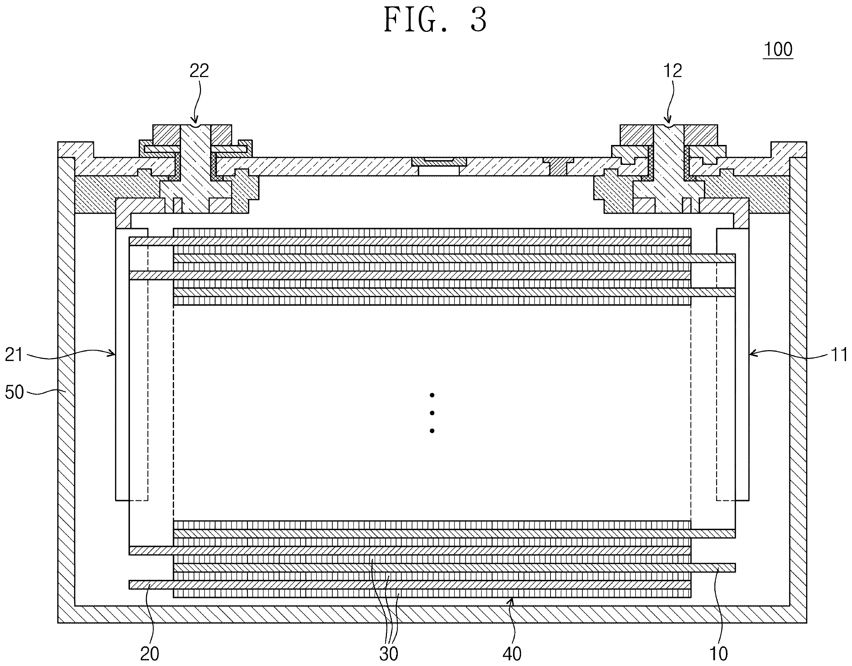

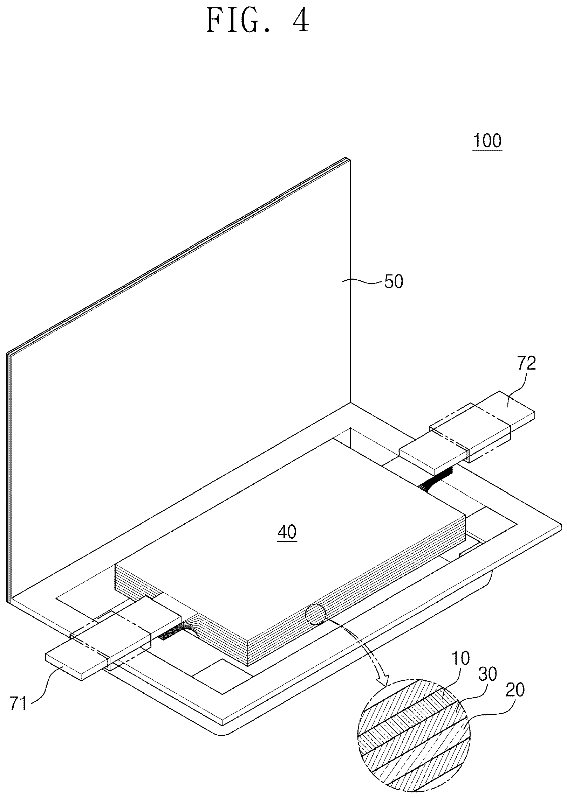

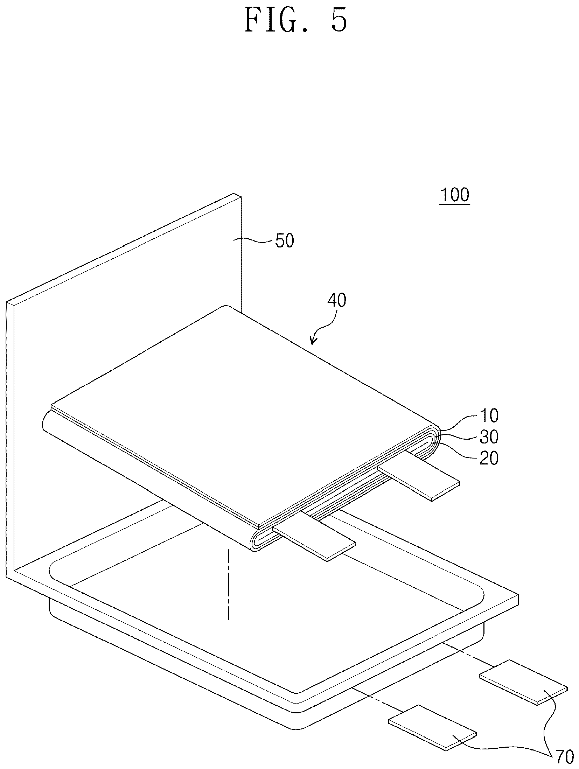

Based on the shape of a rechargeable lithium battery, the rechargeable lithium battery may be classified into cylindrical, prismatic, pouch, and coin types. FIGS. 2 to 5 illustrate simplified diagrams showing a rechargeable lithium battery according to an example embodiment, FIG. 2 showing a cylindrical battery, FIG. 3 showing a prismatic battery, and FIGS. 4 and 5 showing pouch-type batteries. Referring to FIGS. 2 to 4, a rechargeable lithium battery 100 may include an electrode assembly 40 in which a separator 30 is interposed between a positive electrode 10 and a negative electrode 20, and may also include a casing 50 in which the electrode assembly 40 is accommodated. The positive electrode 10, the negative electrode 20, and the separator 30 may be impregnated in an electrolyte (not shown). The rechargeable lithium battery 100 may include a sealing member 60 that seals the casing 50 as illustrated in FIG. 2. In addition, as illustrated in FIG. 3, the rechargeable lithium battery 100 may include a positive electrode lead tab 11, a positive electrode terminal 12, a negative electrode lead tab 21, and a negative electrode terminal 22. As shown in FIGS. 4 and 5, the rechargeable lithium battery 100 may include an electrode tab 70 illustrated in FIG. 5, or a positive electrode tab 71 and a negative electrode tab 72 illustrated in FIG. 4, the electrode tab 70/71/72 constituting an electrical path for externally inducing a current generated in the electrode assembly 40 to outside of the battery 100.

In the example embodiments that follow, a detailed description of technical features repetitive to those of the rechargeable lithium battery discussed above with reference to FIGS. 1 to 5 will be omitted, and a difference therewith will be discussed in detail.

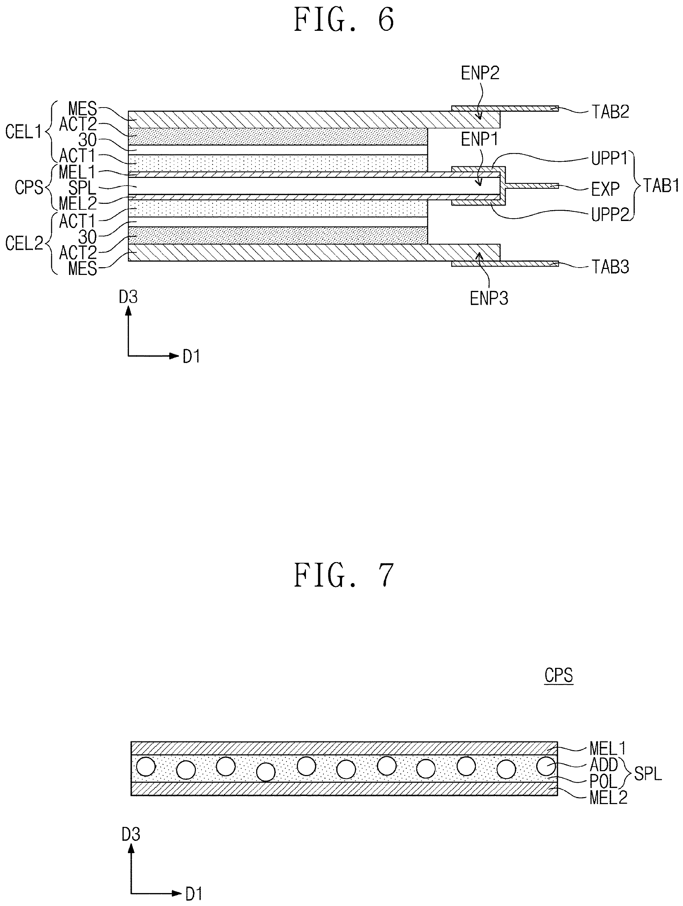

FIG. 6 illustrates a cross-sectional view showing a rechargeable lithium battery according to an example embodiment of the present disclosure. Referring to FIG. 6, s single bi-cell may include a composite substrate CPS, a first battery cell CEL1 on one surface of the composite substrate CPS, and a second battery cell CEL2 on another surface of the composite substrate CPS. The single bi-cell may be constituted by the first battery cell CEL1, the second battery cell CEL2, and the composite substrate CPS of FIG. 6. The first battery cell CEL1, the second battery cell CEL2, and the composite substrate CPS of FIG. 6 may constitute the electrode assembly 40 discussed above with reference to FIGS. 2 to 5.

Each, or at least one, of the first battery cell CEL1 and the second battery cell CEL2 may include a first active material layer ACT1, a separator 30, a second active material layer ACT2, and a metal substrate MES. The first active material layer ACT1 may be provided on the composite substrate CPS. The second active material layer ACT2 may be spaced apart from the first active material layer ACT1 across the separator 30. The metal substrate MES may be provided on the second active material layer ACT2.

The first active material layer ACT1 may be or include one of the positive electrode active material layer AML1 and the negative electrode active material layer AML2 that are discussed above with reference to FIG. 1. The second active material layer ACT2 may be or include the other of the positive electrode active material layer AML1 and the negative electrode active material layer AML2 that are discussed above with reference to FIG. 1. In an example embodiment of the present disclosure, the first active material layer ACT1 may be or include the positive electrode active material layer AML1, and the second active material layer ACT2 may be or include the negative electrode active material layer AML2. The metal substrate MES may be or include the current collector COL1 or COL2 discussed above with reference to FIG. 1.

The metal substrate CPS may include a support layer SPL, and may also include a first metal layer MEL1 and a second metal layer MEL2 located on opposite surfaces of the support layer SPL. The first metal layer MEL1 of the composite substrate CPS may be in contact with the first active material layer ACT1 of the first battery cell CEL1. The second metal layer MEL2 of the composite substrate CPS may be in contact with the first active material layer ACT1 of the second battery cell CEL2. Each, or at least one, of the first and second metal layers MEL1 and MEL2 of the composite substrate CPS may correspond to one of the current collectors COL1 and COL2 that are discussed above with reference to FIG. 1.

The support layer SPL may include a polymer film. For example, the support layer SPL may include at least one of a polyethylene film, a polypropylene film, a polyvinylidene chloride film, or a multi-layered film including a combination thereof. The support layer SPL may have desired or improved ion permeability and superior mechanical strength.

Each, or at least one, of the first and second metal layers MEL1 and MEL2 may include at least one of aluminum, aluminum alloys, copper, copper alloys, nickel, nickel alloys, titanium, titanium alloys, iron, iron alloys, silver, and silver alloys.

In an example embodiment, each, or at least one, of the first and second metal layers MEL1 and MEL2 may have a thickness greater than 0 µm and equal to or less than 5 µm. For example, each, or at least one, of the first and second metal layers MEL1 and MEL2 may have a thickness of ≥ 200 nm to ≤ 5 µm. The support layer SPL may have a thickness of ≥ 2 µm to ≤ 10 µm. For example, the support layer SPL may have a thickness of ≥ 3 µm to ≤ 10 µm. The thickness of the support layer SPL may be greater than the thickness of each, or at least one, of the first and second metal layers MEL1 and MEL2.

The composite substrate CPS may have a first end portion ENP1 at one end thereof. The metal substrate MES of the first battery cell CEL1 may include a second end portion ENP2 at one end thereof. The metal substrate MES of the second battery cell CEL2 may include a third end portion ENP3 at one end thereof.

A first tab TAB1 may be located on the first end portion ENP1 of the composite substrate CPS. The first tab TAB1 may include a first connection portion UPP1, a second connection portion UPP2, and an extension portion EXP. The first connection portion UPP1 may be in contact with the first metal layer MEL1 of the composite substrate CPS. The second connection portion UPP2 may be in contact with the second metal layer MEL2 of the composite substrate CPS. The extension portion EXP may connect the first connection portion UPP1 and the second connection portion UPP2 to each other. The extension portion EXP may horizontally extend in a first direction D1 from the first end portion ENP1.

The first tab TAB1 may electrically connect the first metal layer MEL1 and the second metal layer MEL2 to each other. The first tab TAB1 may be configured to apply a voltage in common to the first metal layer MEL1 and the second metal layer MEL2.

A second tab TAB2 may be provided on the second end portion ENP2 of the metal substrate MES. The second tab TAB2 may be configured to apply a voltage to the metal substrate MES of the first battery cell CEL1. A third tab TAB3 may be provided on the third end portion ENP3 of the metal substrate MES. The third tab TAB3 may be configured to apply a voltage to the metal substrate MES of the second battery cell CEL2.

The first tab TAB1 may constitute one of positive and negative electrode tabs (or positive and negative electrode lead tabs) such as the tabs 70/71/72 discussed above with reference to FIGS. 2 to 5. The second and third tabs TAB2 and TAB3 may constitute the other of positive and negative electrode tabs (or positive and negative electrode lead tabs) discussed above with reference to FIGS. 2 to 5.

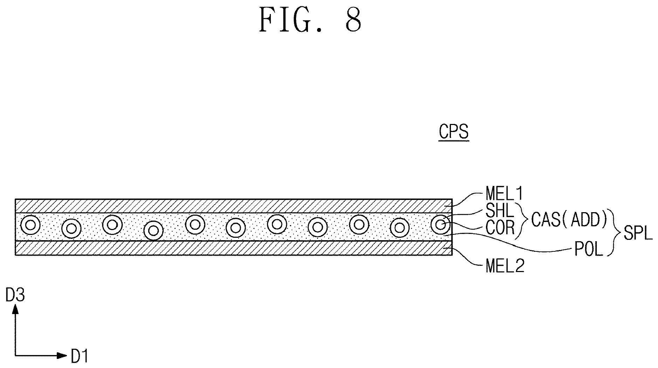

FIGS. 7 and 8 illustrate cross-sectional views showing a composite substrate according to an example embodiment of the present disclosure.

Referring to FIG. 7, the support layer SPL may include a polymer layer POL and an additive ADD dispersed in the polymer layer POL. The polymer layer POL may include a polymer film as discussed above. The additive ADD may be or include a particle. The particle may include a heat-absorbing material. For example, the additive ADD may be or include a ceramic particle. The ceramic particle may include at least one of pseudoboehmite, aluminum oxide (Al₂O₃), silicon dioxide (SiO₂), titanium dioxide (TiO₂), tin oxide (SnO₂), cerium oxide (CeO₂), magnesium oxide (MgO), nickel oxide (NiO), calcium oxide (CaO), gallium oxide (Ga₂O₃), zinc oxide (ZnO), zirconium dioxide (ZrO₂), yttrium oxide (Y₂O₃), strontium titanate (SrTiO₃), barium titanate (BaTiO₃), magnesium hydroxide (Mg(OH)₂), and boehmite.

The ceramic particle in the support layer SPL may absorb heat. A portion of the polymer layer POL surrounding the ceramic particle may increase rapidly, causing the polymer layer POL to melt. This may accelerate a rate at which an internal short-circuit is hindered or suppressed.

The ceramic particle may have an average particle diameter (D₅₀) ranging from ≥ 0.07 µm to ≤ 3 µm, for example, from ≥ 0.1 µm to ≤ 2 µm or from ≥ 0.5 µm to ≤ 1.5 µm. An average particle diameter (D₉₀) of the ceramic particle may range from ≥ 2 µm to ≤ 5 µm, for example, from ≥ 4 µm to ≤ 4.5 µm. The D₅₀ or D₉₀ may be defined to indicate a particle diameter equivalent to a particle diameter at a cumulative volume of 50% or 90% from a smaller particle diameter side in a particle size distribution of the ceramic particle. When a size of the ceramic particle falls within the range above, an internal short-circuit may be effectively hindered, suppressed or blocked, and cell ignition may be hindered, suppressed or blocked.

Referring to FIG. 8, the support layer SPL may include a polymer layer POL and an additive ADD dispersed in the polymer layer POL. In the example embodiment, the additive ADD may be or include a capsule CAS. The capsule CAS may include a core COR and a shell SHL. The shell SHL may be located on a surface of the core COR. For example, the capsule CAS may be or include a fire-extinguishing liquid capsule.

The core COR of the fire-extinguishing liquid capsule CAS may include a fire-extinguishing liquid. The fire-extinguishing liquid may include at least one of a halogen compound, a solid aerosol fire-extinguishing material, a gas generating agent, and a fluoroketone compound. The halogen compound may be defined to refer to a compound in which some or all of hydrogen in an aliphatic hydrocarbon molecule is replaced with halogen elements (F, Cl, Br, I). For example, the halogen compound may include at least one of methyl bromide (CH₃Br), methyl iodide (CH₃I), bromochloromethane (CH₂BrCl), dibromodifluoromethane (CF₂Br₂), bromochlorodifluoromethane (CF₂BrCl), bromotrifluoromethane (CF₃Br), carbontetrachloride (CCl₄), or dibromotetrafluoroethane (C₂F₄Br₂). For example, the solid aerosol fire-extinguishing material may include at least one of potassium nitrate (KNO₃), potassium perchlorate (KClO₄), barium nitrate (Ba(NO₃)₂), and resins. The gas generating agent may produce an inert gas, such as carbon dioxide, through thermal decomposition. For example, the gas generating agent may include at least one of potassium hydrogen carbonate (KHCO₃), sodium hydrogen carbonate (NaHCO₃), and manganese carbonate (MnCO₃). For example, fluoroketone compound may include at least one of hydrofluorocarbons, hydrochlorofluorocarbons, perfluorocarbons, perfluoropolyethers, hydrofluoroethers, hydrofluoropolyethers, chlorofluorocarbons, bromo fluorocarbons, bromochlorofluorocarbons, iodofluorocarbons, and hydrobromofluorocarbons.

The shell SHL of the fire-extinguishing liquid capsule may include a polymer. For example, the polymer may include at least one of polyethylene terephthalate, polyethylene, polypropylene, polymethyl methacrylate, poly(1-butene), and polyimide.

The polymer may be melted. The melting temperature may range from ≥ 100°C to ≤ 260°C. For example, the melting temperature may range from ≥ 100°C to ≤ 250°C or from ≥ 150°C to ≤ 250°C. The capsule CAS may have a granular shape and/or a tabular shape.

The capsule CAS may have a size of ≥ 3 µm to ≤ 10 µm. For example, the capsule CAS may have a size of ≥ 3 µm to ≤ 8 µm. When the capsule CAS has a granular shape, the size of the capsule CAS may be defined as a particle diameter. In an example embodiment, the particle diameter may indicate a diameter measured by randomly selecting approximately 30 capsules CAS from an electron microscope image of the capsule CAS.

For example, the capsule CAS may have a major axis and a minor axis. The major axis may have a length of ≥ 3 µm to ≤ 10 µm. The minor axis may have a length of ≥ 0.5 µm to ≤ 2 µm

A total thickness of the shell SHL may be ≥ 30% to ≤ 50% of the size of the fire-extinguishing liquid capsule CAS. For example, the total thickness of the shell SHL may be about 50%. When viewed in a cross-section of the fire-extinguishing liquid capsule CAS, the total thickness of the shell SHL may be defined to refer to a difference in particle diameter between the fire-extinguishing liquid capsule CAS and the core COR. For example, the particle diameters of the fire-extinguishing liquid capsule CAS and the core COR may respectively refer to the diameters of the capsule CAS and the core COR measured by randomly selecting cross-sections of approximately 30 capsules CAS from an electron microscope image of a cross-section of the capsule CAS. For example, the total thickness of the shell SHL may range from ≥ 0.9 µm to ≤ 5 µm or from ≥ 1.5 µm to ≤ 4 µm.

When the size of the capsule CAS and the thickness of the shell SHL fall within the range above, it may be possible to effectively hinder, suppress or block the internal short-circuit and the cell ignition.

When heat is applied to the capsule CAS, the shell SHL may be melted and the fire-extinguishing liquid may be released from the core COR. The fire-extinguishing liquid may spread over a metal nail that penetrates a rechargeable lithium battery and an interior (the first active material layer ACT1, the second active material layer ACT2, the first metal layer MEL1, and the second metal layer MEL2) of the rechargeable lithium battery. Accordingly, it may be possible to effectively hinder, suppress or block internal contact, internal short-circuits, and cell ignition.

Referring back to FIGS. 7 and 8, an amount of the additive ADD may be ≥ 1 wt% to ≤ 20 wt% relative to the total weight of the support layer SPL. For example, the amount of the additive ADD may be ≥ 2 wt% to ≤ 20 wt%, ≥ 3 wt% to ≤ 15 wt%, or ≥ 8 wt% to ≤ 12 wt% relative to the total weight of the support layer SPL

An area of the additive ADD may be ≥ 1% to ≤ 10% of a unit cross-sectional area (1 cm²) of the support layer SPL. In this example, the area of the additive ADD may be between ≥ 0.01 cm² and ≤ 0.1 cm² relative to the unit cross-sectional area (1 cm²) of the support layer SPL. For example, the area of the additive ADD may be between ≥ 3% and ≤ 7% of the unit cross-sectional area (1 cm²) of the support layer SPL. In this example, the area of the additive ADD may be between ≥ 0.03 cm² and ≤ 0.07 cm² relative to the unit cross-sectional area (1 cm²) of the support layer SPL.

An amount and area of the additive ADD may be measured using SEM-EDS (scanning electron microscopy-energy dispersive X-ray spectroscopy). Besides SEM-EDS, inductively coupled plasma mass spectrometry (ICP-MS) or inductively coupled plasma optical emission spectroscopy (ICP-OES) may be used to measure the amount and area of the additive ADD.

When the amount and area of the additive ADD fall within any of the ranges above, the composite substrate CPS may provide a battery with improved stability.

The following description will focus on some example embodiments of the present disclosure. The following example embodiments are provided to aid in understanding of the present disclosure and are not intended to limit the scope of the present disclosure.

### Example Embodiment 1

A rechargeable lithium battery was prepared which includes a composite substrate for the rechargeable lithium battery. The composite substrate includes a support layer including a ceramic particle, a first metal layer on a top surface of the support layer, and a second metal layer on a bottom surface of the support layer. The ceramic particle included pseudoboehmite. An amount of the ceramic particle was 10 wt% relative to the total weight of the support layer. Average particle diameters D₅₀ and D₉₀ of the ceramic particles were 1 µm and 4 µm, respectively.

### Example Embodiment 2

A rechargeable lithium battery including a composite substrate was prepared in the same method as in Example Embodiment 1, with a difference that the amount of the ceramic particle was 5 wt% relative to the total weight of the support layer.

### Example Embodiment 3

A rechargeable lithium battery including a composite substrate was prepared in the same method as in Example Embodiment 1, with a difference that the amount of the ceramic particle was 3 wt% relative to the total weight of the support layer.

### Example Embodiment 4

A rechargeable lithium battery including a composite substrate was prepared in the same method as in Example Embodiment 1, with a difference that the amount of the ceramic particle was 20 wt% relative to the total weight of the support layer.

### Example Embodiment 5

A rechargeable lithium battery including a composite substrate was prepared in the same method as in Example Embodiment 1, with a difference that the D₅₀ and D₉₀ of the ceramic particle were 3 µm and 5 µm, respectively.

### Example Embodiment 6

A rechargeable lithium battery including a composite substrate was prepared in the same method as in Example Embodiment 1, with a difference that pseudoboehmite was replaced with aluminum oxide (Al₂O₃) as the ceramic particle.

### Example Embodiment 7

A rechargeable lithium battery including a composite substrate was prepared in the same method as in Example Embodiment 1, with a difference that pseudoboehmite was replaced with magnesium hydroxide (Mg(OH)₂) as the ceramic particle.

### Example Embodiment 8

A rechargeable lithium battery was prepared which includes a composite substrate for the rechargeable lithium battery. The composite substrate included a support layer including a fire-extinguishing liquid capsule, a first metal layer on a top surface of the support layer, and a second metal layer on a bottom surface of the support layer. The fire-extinguishing liquid capsule included a core and a shell. The core included methyl bromide (CH₃Br). The shell included polypropylene (PP). An amount of the fire-extinguishing liquid capsule was 10 wt% relative to the total weight of the support layer. A particle diameter of the fire-extinguishing liquid capsule was 6 µm, and a total thickness of the shell was 3 µm.

### Example Embodiment 9

A rechargeable lithium battery including a composite substrate was prepared in the same method as in Example Embodiment 8, with a difference that the core of the fire-extinguishing liquid capsule included a solid aerosol extinguishing material and the shell of the fire-extinguishing material included polyethylene terephthalate (PET).

### Example Embodiment 10

A rechargeable lithium battery including a composite substrate was prepared in the same method as in Example Embodiment 8, with a difference that the particle diameter of the fire-extinguishing liquid capsule was 10 µm and the total thickness of the shell was 4 µm.

### Comparative Example 1

A rechargeable lithium battery including a composite substrate was prepared in the same method as in Example Embodiment 1, with a difference that the ceramic particle was not included in the composite substrate.

### Comparative Example 2

A rechargeable lithium battery including a composite substrate was prepared in the same method as in Example Embodiment 1, with a difference that the amount of the ceramic particle was 25 wt% relative to the total weight of the support layer.

### Comparative Example 3

A rechargeable lithium battery including a composite substrate was prepared in the same method as in Example Embodiment 1, with a difference that the D₅₀ and D₉₀ of the ceramic particle were 0.01 µm and 0.03 µm, respectively.

### Comparative Example 4

A rechargeable lithium battery including a composite substrate was prepared in the same method as in Example Embodiment 1, with a difference that the D₅₀ and D₉₀ of the ceramic particle were 0.05 µm and 1 µm, respectively.

### Comparative Example 5

A rechargeable lithium battery including a composite substrate was prepared in the same method as in Example Embodiment 1, with a difference that the D₅₀ and D₉₀ of the ceramic particle were 5 µm and 9 µm, respectively.

### Comparative Example 6

A rechargeable lithium battery including a composite substrate was prepared in the same method as in Example Embodiment 8, with a difference that the particle diameter of the fire-extinguishing liquid capsule was 1 µm and the total thickness of the shell was 0.1 µm.

### Comparative Example 7

A rechargeable lithium battery including a composite substrate was prepared in the same method as in Example Embodiment 8, with a difference that the particle diameter of the fire-extinguishing liquid capsule was 2 µm and the total thickness of the shell was 0.2 µm.

### Comparative Example 8

A rechargeable lithium battery including a composite substrate was prepared in the same method as in Example Embodiment 8, with a difference that the particle diameter of the fire-extinguishing liquid capsule was 10 µm and the total thickness of the shell was 6 µm.

### Experimental Example: Measurement of Voltage Drop

The voltage drop of a single-layered pouch cell was measured which includes the composite substrate according to the above Example Embodiments and Comparative Examples. The voltage drop of the Example Embodiments and Comparative Examples was measured under the same conditions using a nail tester (HS-3900N commercially available from Duocom Industries, Inc.). The voltage drop may refer to a difference between an initial voltage and a cell voltage measured by measurement equipment when the pouch cell is penetrated with a nail. The result is listed in Table 1.

**[Table 1]**

| Category | Additive | | | Voltage drop (V) |
|---|---|---|---|---|
| | Component | Amount (wt%) | Size (µm) | |
| Example Embodiment 1 | Ceramic particle (pseudoboehmite) | 10 | D₅₀ : 1 | 0 |
| | | | D₉₀ : 4 | |
| Example Embodiment 2 | Ceramic particle (pseudoboehmite) | 5 | D₅₀ : 1 | 0.25 |
| | | | D₉₀ : 4 | |
| Example Embodiment 3 | Ceramic particle (pseudoboehmite) | 3 | D₅₀ : 1 | 0.28 |
| | | | D₉₀ : 4 | |
| Example Embodiment 4 | Ceramic particle (pseudoboehmite) | 20 | D₅₀ : 1 | 0.1 |
| | | | D₉₀ : 4 | |
| Example Embodiment 5 | Ceramic particle (pseudoboehmite) | 10 | D₅₀ : 3 | 0.1 |
| | | | D₉₀ : 5 | |
| Example Embodiment 6 | Ceramic particle (aluminum oxide) | 10 | D₅₀ : 1 | 0.15 |
| | | | D₉₀ : 4 | |
| Example Embodiment 7 | Ceramic particle (magnesium hydroxide) | 10 | D₅₀ : 1 | 0.18 |
| | | | D₉₀ : 4 | |
| Example Embodiment 8 | Fire-extinguishing liquid capsule (Core : CH₃Br, Shell : PP) | 10 | Particle diameter : 6 | 0.1 |
| | | | Thickness : 3 | |
| Example Embodiment 9 | Fire-extinguishing liquid capsule (Core : solid aerosol extinguishing material, Shell : PET) | 10 | Particle diameter : 6 | 0.13 |
| | | | Thickness : 3 | |
| Example Embodiment 10 | Fire-extinguishing liquid capsule (Core : CH₃Br, Shell : PP) | 10 | Particle diameter : 10 | 0.36 |
| | | | Thickness : 4 | |
| Comparative Example 1 | - | - | - | 0.38 |
| Comparative Example 2 | Ceramic particle (pseudoboehmite) | 25 | D₅₀ : 1 | 0.38 |
| | | | D₉₀ : 4 | |
| Comparative Example 3 | Ceramic particle (pseudoboehmite) | 10 | D₅₀ : 0.01 | 0.36 |
| | | | D₉₀ : 0.03 | |
| Comparative Example 4 | Ceramic particle (pseudoboehmite) | 10 | D₅₀ : 0.05 | 0.33 |
| | | | D₉₀ : 1 | |
| Comparative Example 5 | Ceramic particle (pseudoboehmite) | 10 | D₅₀ : 5 | 0.3 |
| | | | D₉₀ : 9 | |
| Comparative Example 6 | Fire-extinguishing liquid capsule (Core : CH₃Br, Shell : PP) | 10 | Particle diameter : 1 | 0.31 |
| | | | Thickness : 0.1 | |
| Comparative Example 7 | Fire-extinguishing liquid capsule (Core : CH₃Br, Shell : PP) | 10 | Particle diameter : 2 | 0.3 |
| | | | Thickness : 0.2 | |
| Comparative Example 8 | Fire-extinguishing liquid capsule (Core : CH₃Br, Shell : PP) | 10 | Particle diameter : 10 | 0.38 |
| | | | Thickness : 6 | |

Referring to Table 1, the voltage drop of the pouch sell according to Example Embodiments 1 to 7 was less than the voltage drop of the pouch cell according to Comparative Example 1 to 5. For example, the composite substrate according to Comparative Examples 1 to 5 had a large short-circuit area and a high electron flow, and thus there was a high possibility of heat generation and thermal runaway. In contrast, the composite substrate according to Example Embodiments 1 to 7 was effective against an internal short-circuit.

The voltage drop of the pouch cell according to Example Embodiments 8 to 10 was less than the voltage drop of the pouch cell according to Comparative Examples 1 and 6 to 8. For example, the composite substrate according to Example Embodiments 8 to 10 was effective against an internal short-circuit compared to the composite substrate according to Comparative Examples 1 and 6 to 8.

A composite substrate according to the present disclosure may hinder, suppress or block an internal short-circuit. Thus, the composite substrate may maintain battery performance and provide a battery with stability. A rechargeable lithium battery including the composite substrate of the present disclosure may have improved stability and consistent performance.

Although some example embodiments of the present disclosure have been discussed with reference to accompanying figures, it will be understood that various changes in form and details may be made therein without departing from the spirit and scope of the present disclosure. It will be apparent to those skilled in the art that various substitution, modifications, and changes may be thereto without departing from the scope and spirit of the present disclosure.

## Claims

1. A composite substrate (CPS) for a rechargeable lithium battery (100), the composite substrate (CPS) comprising:
a support layer (SPL) that includes an additive (ADD);
a first metal layer (MEL1) on a top surface of the support layer (SPL); and
a second metal layer (MEL2) on a bottom surface of the support layer (SPL),
wherein the additive (ADD) includes at least one of a ceramic particle and a fire-extinguishing liquid capsule (CAS), and
wherein an amount of the additive (ADD) is ≥ 1 wt% to ≤ 20 wt% relative to a total weight of the support layer (SPL).

2. The composite substrate (CPS) of claim 1, wherein the ceramic particle comprises at least one of pseudoboehmite, aluminum oxide, silicon dioxide, titanium dioxide, tin oxide, cerium oxide, magnesium oxide, nickel oxide, calcium oxide, gallium oxide, zinc oxide, zirconium dioxide, yttrium oxide, strontium titanate, barium titanate, magnesium hydroxide, and boehmite.

3. The composite substrate (CPS) of claim 1 or 2, wherein an average particle diameter (D₅₀) of the ceramic particle is in a range of ≥ 0.07 µm to ≤ 3 µm.

4. The composite substrate (CPS) of any one of claims 1 to 3, wherein
an average particle diameter (D₉₀) of the ceramic particle is in a range of ≥ 2 µm to ≤ 5 µm, and
the D₉₀ is a particle diameter equivalent to a particle diameter at a cumulative volume of 90% from a smaller particle diameter side in a particle size distribution.

5. The composite substrate (CPS) of any one of claims 1 to 4, wherein the fire-extinguishing liquid capsule (CAS) comprises:
a core (COR) that includes a fire-extinguishing liquid; and
a shell (SHL) on a surface of the core (COR),
wherein the shell (SHL) includes a polymer.

6. The composite substrate (CPS) of claim 5, wherein the fire-extinguishing liquid includes at least one of halogen compounds, solid aerosol fire-extinguishing materials, potassium hydrogen carbonate, sodium hydrogen carbonate, manganese carbonate, and fluoroketone compounds.

7. The composite substrate (CPS) of claim 5 or 6, wherein a melting temperature of the polymer is in a range of ≥ 100°C to ≤ 260°C.

8. The composite substrate (CPS) of any one of claims 1 to 7, wherein a structure of the fire-extinguishing liquid capsule (CAS) is at least one of a granular shape and a tabular shape.

9. The composite substrate (CPS) of any one of claims 1 to 8, wherein a size of the fire-extinguishing liquid capsule (CAS) is in a range of ≥ 3 µm to ≤ 10 µm.

10. The composite substrate (CPS) of any one of claims 1 to 9, wherein the fire-extinguishing liquid capsule (CAS) has a major axis and a minor axis,
wherein a length of the major axis is in a range of ≥ 3 µm to ≤ 10 µm, and
wherein a length of the minor axis is in a range of ≥ 0.5 µm to ≤ 2 µm.

11. The composite substrate (CPS) of any one of claims 5 to 7, wherein a total thickness of the shell (SHL) is ≥ 30% to ≤ 50% of a size of the fire-extinguishing liquid capsule (CAS).

12. The composite substrate (CPS) of any one of claims 1 to 11, wherein an area of the additive (ADD) is between ≥ 1% and ≤ 10% relative to a unit cross-sectional area (cm²) of the support layer (SPL).

13. The composite substrate (CPS) of any one of claims 1 to 12, wherein a thickness of at least one of the first and second metal layers (MEL1, MEL2) is greater than 0 µm and equal to or less than 5 µm.

14. The composite substrate (CPS) of any one of claims 1 to 13, wherein a thickness of the support layer (SPL) is in a range of ≥ 2 µm to ≤ 10 µm.

15. A rechargeable lithium battery (100) comprising the composite substrate (CPS) as set forth in any one of claims 1 to 14.
